# EUROPEAN PATENT APPLICATION

(11) **EP 4 082 331 A1**
(43) Date of publication of application: **02.11.2022**
(21) Application number: 21171507.3
(22) Date of filing: 30.04.2021
(51) Int. Cl.: A01G 25/09

(54) **GARDEN CARE VEHICLE, WATER SUPPLY STATION AND SYSTEM COMPRISING A GARDEN CARE VEHICLE AND A WATER SUPPLY STATION**

(71) Applicant: HUSQVARNA AB, 561 82 Huskvarna (SE)
(72) Inventor: Schenk, Christoph, 89610 Oberdischingen (DE)
(74) Representative: Finkele, Rolf

(57) **Abstract**

The invention relates to a garden care vehicle (10) comprising at least one watering device, wherein the at least one watering device includes at least one coupling element (90) for coupling the at least one watering device to an external water outlet (120) of a water supply station (110) for supplying the watering device with water, wherein the garden care vehicle (10) is configured to be navigable or to navigate in a first non-autonomous or autonomous navigation mode and to detect a position of the water supply station (110) or the external water outlet (120) or a position marking element (140) associated with said external water outlet (120), and in response to a detection of the position of the water supply station (110) or the external water outlet (120) or the position marking element (140) to navigate in a second autonomous navigation mode, wherein, in the first navigation mode, the garden care vehicle (10) is configured to be navigated non-autonomously or to navigate autonomously towards the water supply station (110), and wherein, in the second navigation mode, the garden care vehicle (10) is configured to navigate autonomously into a position relative to the detected position of the water supply station (110) or the external water outlet (120) or the position marking element (140) in which the at least one coupling element (90) can be coupled to the external water outlet (120).

## Description

The present invention relates generally to the field of garden irrigation or garden watering. More specifically, the present invention relates to a garden care vehicle comprising at least one watering device, to a water supply station and to a system including such a garden care vehicle and such a water supply station.

### BACKGROUND OF THE INVENTION

Systems including irrigation robots or vehicles for automatic irrigation or watering are known. Such systems typically require a water supply station to be connected with the irrigation robot for supplying water to the irrigation robot via a hose or for filling a tank of the irrigation robot. Finding the water supply station by the irrigation robot and establishing an automatic connection by the irrigation robot for supplying the irrigation robot with water from the water supply station has been an issue to former developments.

The document US 4,522,338 discloses a self-propelled irrigation system including a self powered cart and hose connection system by which access is made to various points along the length of the water supply main. The cart moves along a prescribed path defined by a ground mounted electrical conductor wire which is arranged in relation to individual water access valves. The cart approaches an individual water access valve guided by the electrical conductor wire. Additionally, signals are received by a computer from various signal emitters connected to the electrical conductor and spaced at strategic locations along the path of the cart. Signals from the signal emitters are received by a sensor at the forward end of the cart frame. Upon reaching an access valve the computer receives a signal from such an emitter via a signal emitter sensor and activates the hose reel motor to lower the standpipe toward the access valve from its suspended position on the cart frame. The standpipe bottom will be guided into position over the access valve as it is lowered.

The document DE 10 2008 041 323 A1 discloses an irrigation robot that is enabled to control autonomously watering means. Specifically the irrigation robot is enabled to navigate to and to dock to a water supply station autonomously, wherein odometry data or GPS data are used for autonomous navigation.

### SUMMARY OF THE INVENTION

It is an objective of the present invention to provide a garden care vehicle, a water supply station and a system comprising both that simplify automatic finding and connection of the water supply station by and with the garden care vehicle.

This objective is achieved by a garden care vehicle comprising at least one watering device, wherein the at least one watering device includes at least one coupling element for coupling the at least one watering device to an external water outlet of a water supply station for supplying the watering device with water, wherein the garden care vehicle is configured to be navigable or to navigate in a first non-autonomous or autonomous navigation mode and to detect a position of the water supply station or the external water outlet or a position marking element associated with said external water outlet, and in response to a detection of the position of the water supply station or the external water outlet or the position marking element to navigate in a second autonomous navigation mode, wherein, in the first navigation mode, the garden care vehicle is configured to be navigated non-autonomously or to navigate autonomously towards the water supply station, and wherein, in the second navigation mode, the garden care vehicle is configured to navigate autonomously into a position relative to the detected position of the water supply station or the external water outlet or the position marking element in which the at least one coupling element can be coupled to the external water outlet.

A garden care vehicle according to the invention is enabled to navigate autonomously and very precisely into a position in which the coupling element can be coupled to the water outlet of the water supply station. Therefore, commonly known tap structures or hose fittings can be used for the coupling element and the water outlet. These effects are achieved in that the garden care vehicle can search and detect the position of the water supply station or of a water outlet of the water supply station or of a position marking element associated with the water outlet in a first navigation mode and to enter into the second navigation mode in response to the detection of the position, wherein in the second navigation mode, the detected position of the water supply station or the water outlet or the position marking element is used for navigating into the correct coupling position. It is possible to foresee that the second navigation mode overruns the first navigation mode in response to the detection of the position of the water supply station or the external water outlet or the position marking element. The garden care vehicle may be a combined mowing and watering robotic vehicle or a watering robotic vehicle.

According to an advantageous embodiment, the garden care vehicle comprises at least one first navigation assistance device, wherein the garden care vehicle navigates in the first navigation mode in dependence on the at least one first navigation assistance device and/or
in that the garden care vehicle comprises at least one second navigation assistance device, wherein the garden care vehicle navigates in the second autonomous navigation mode in dependence on the at least one second navigation assistance device or in dependence on the at least one first navigation device and the at least one second navigation device.

The garden care vehicle comprises two different navigation assistance devices for navigating in two different navigation modes. Thus, the garden care vehicle is enabled to carry out two different navigation tasks, namely to navigate in the first navigation mode for finding the position of the water supply station and also to navigate during regular watering operation of the vehicle or to navigate to a power supply station, and to navigate in the second navigation mode in which a very precise positioning of the garden care vehicle is required for enabling coupling of the coupling element with the water outlet.

Having such a first navigation assistance device enables the garden care vehicle to navigate autonomously through a garden. Having such a second navigation assistance device enables the garden care vehicle to navigate autonomously into position relative to a water supply station that has suitable means for interacting with the sensor. More specifically, in the first navigation mode, a sensor of the second navigation assistance device may operate in order to search for the water supply station or the water outlet or the position marking element. However, as long as the sensor of the second navigation assistance device does not perceive a position of the water supply station, the garden care vehicle does not make use of the second navigation assistance device and navigates therefore in the first navigation mode. As soon as the sensor of the second navigation assistance device detects the water supply station, the garden care vehicle enters the second navigation mode and uses the second navigation assistance device, specifically a sensor associated with the second navigation assistance device, or a combination of first and second navigation assistance device, specifically the sensors of the first and the second navigation assistance device for navigating in the final position.

It shall be understood that "first" and "second" do not define a ranking in any way. Specifically, a garden care vehicle according to the invention may have only the first navigation assistance device or only the second navigation assistance device without having the respective other.

Further advantageously, the first navigation assistance device comprises a sensor for detecting guide wires or a sensor for detecting obstacles or a sensor, in particular a GPS sensor, for detecting the position of the garden care vehicle within an area of operation,
and/or
wherein the second navigation assistance device comprises a sensor unit for detecting the position of the external water outlet, in particular wherein the sensor unit includes a sensor that is a Hall-Sensor or a magnetic sensor or an optical sensor or a camera.

Hall-Sensor or a magnetic sensor or an optical sensor require such means associated with the water supply station and are very reliable and robust in rough and wet environment. A camera does not require any such means associated with the water supply station and enables position detection by image capturing and recognition.

According to a further advantageous embodiment the garden care vehicle comprises a chassis and/or enclosure elements, wherein the at least one coupling element is arranged in a fixed position on the chassis and/or on the enclosure elements, in particular wherein the at least one coupling element is releasable from the fixed position on the chassis and/or the enclosure elements in response to the garden care vehicle reaching the position relative to the external water outlet in which the at least one coupling element can be coupled to the external water outlet, preferably wherein the at least one coupling element can be coupled to the external water outlet by a movement of the at least one coupling element in a coupling direction, optionally wherein the coupling direction is substantially perpendicular to a central longitudinal axis of the garden care vehicle.

Thus, it is possible to attach the coupling element to the garden care vehicle in such way that it is fixed during normal operation of the vehicle. Further, from such a fixed position, the coupling element can be coupled to the water outlet by a straight movement without any further manipulations of the coupling element being necessary.

It is also advantageous that the garden care vehicle comprises a chassis and/or enclosure elements, wherein the sensor unit, in particular the sensor, for detecting the position of the external water outlet is arranged in a fixed position on the chassis and/or on the enclosure elements, in particular at a fixed distance to the fixed position of the at least one coupling element.

By arranging the sensor unit or the sensor in a fixed distance to the fixed position of the coupling element, the control algorithm for autonomously navigating the vehicle is enhanced in a way that it navigates in dependence to this distance as a constant parameter.

An additional advantageous embodiment comprises that the at least one coupling element is arranged at an outer perimeter of the garden care vehicle and the at least one sensor of the sensor unit is arranged on the chassis and/or on the enclosure elements adjacent to the at least one coupling element, and/or wherein the at least one coupling element and at least the sensor of the sensor unit are arranged outside of an area between the wheels of the garden care vehicle,
and/or wherein the at least one coupling element and at least the sensor of the sensor unit are arranged on or adjacent to a rear side or on or adjacent to a front side of the garden care vehicle,
and/or wherein the at least one coupling element and at least the sensor of the sensor unit are arranged on a line parallel to or matching with a central longitudinal axis of the garden care vehicle, in particular wherein the central longitudinal axis corresponds to a forward and rearward straight ahead driving direction of the garden care vehicle, in particular wherein the coupling element is arranged more distanced from a center point of the garden care vehicle than the sensor.

These specific configurations of coupling element and sensor unit or sensor on the vehicle allow very precise navigation and manoeuvring. Specifically, the vehicle is enabled to manoeuver over very short distances in order to reach the position for coupling the coupling element with the water outlet without extensive movement. Arranging the coupling element and the sensor in one line parallel to or on the central longitudinal axis of the garden care vehicle enables to bring the vehicle into position by simply driving straight forward or rearward without driving curves or rotating.

According to a further advantageous embodiment, the sensor of the sensor unit for detecting the position of the external water outlet has a preferred field of detection, wherein the sensor is fixed on the chassis and/or the enclosure elements in such way that the preferred field of detection is directed substantially in the same direction in which the at least one coupling element can be coupled to the external water outlet, in particular wherein a central axis of the preferred field of detection is parallel to a movement direction of the at least one coupling element for coupling to the external water outlet.

It can be understood that such an arrangement further simplifies the control of the autonomous navigation mode of the vehicle. In particular such an arrangement is adapted to the detection of an external water outlet being arranged below the garden care vehicle, e.g. on or in the ground, requiring the coupling element and the sensor to be directed in vertical alignment, but also to the detection of an external water outlet that is arranged on a wall of a building or a rain barrel, requiring the coupling element and the sensor to be directed in horizontal alignment.

The object of the invention is further solved by a water supply station, in particular including a tap or a pop-up sprinkler or an insertion sprinkler, comprising a water outlet, wherein the water supply station further comprises at least one position marking element directly attached to the water supply station and configured to be detectable by a sensor for detecting the position of the position marking element, in particular of a sensor unit of a garden care vehicle approaching the position marking element. The garden care vehicle may be a garden care vehicle according to the invention.

Such a water supply station enables interaction with a sensor of a garden care vehicle searching the water supply station, wherein the water supply station according to the invention assists the garden care vehicle in autonomously navigating into a position in which the coupling element of the vehicle can be coupled with the water outlet of the water supply station.

According to a further advantageous embodiment, the position marking element is arranged in a fixed distance to the water outlet, in particular wherein the water supply station further comprises or is arranged close to a guide wire configured for guiding a garden care vehicle, preferably in a first navigation mode of a garden care vehicle, more preferably a garden care vehicle according to any one of the claims 1 to 7, towards the water supply station, wherein at least a part of the guide wire that is adjacent to the water supply station, the position marking element and the water outlet are arranged in the same vertical plane.

Such a configuration is adapted to a garden care vehicle having a corresponding configuration of sensor and coupling element. It further enables the garden care vehicle to use in the second navigation mode the sensor for detecting the position of the water supply station as well as the sensor for detecting and following the guide wire.

According to another advantageous embodiment, the position marking element comprises at least one no active signal emitting element, in particular comprising a ferromagnetic material, preferably a permanent magnet, or in particular comprising at least one metallic element causing variations in a magnetic field, preferably an iron body, or comprises at least one active signal emitting element, in particular a signal emitter emitting an electrical or optical or magnetic signal, preferably wherein the signal emitter is supplied with electrical energy by a solar panel electrically coupled with the water supply station.

These elements are adapted to specific sensors that may be used on an associated garden care vehicle. It shall be understood that a permanent magnet or a metallic element causing variations in a magnetic field cause no active signal to be emitted by the position marking element, but the presence of these elements can be perceived by appropriate sensors, such as a Hall-Sensor perceiving a permanent magnet or an electromagnetic sensor perceiving the metallic element. Such elements are advantageous since they do not require a power supply. Signal emitting elements may improve the precision of the position detection by the vehicle.

In a further advantageous embodiment, the water supply station is at least partially arranged in a ground in such way that the water outlet and/or the position marking element is/are arranged substantially at the same level with the surface of the ground.

Thus, it is possible that the garden care vehicle can manoeuver above the water outlet and can navigate into position without being hindered by projecting parts of the water outlet.

Further advantageously, the water supply station comprises a body configured to be arranged at least partially below the surface of the ground and a surround attached to the body and comprising a supporting surface for supporting the water supply station on the surface of the ground, in particular wherein the position marking element is fixedly arranged on the surround and/or wherein the water outlet is arranged centrally on the body, in particular concentrically to the surround, preferably wherein the surround circumferentially surrounds the body.

Thus, a very robust and stable water supply station is provided which is detectable by an adopted garden care vehicle.

The object of the invention is also solved by a system comprising a garden care vehicle, in particular according to any of the claims 1 to 7, and a water supply station, in particular according to any of the claims 8 to 12, wherein the garden care vehicle comprises at least one coupling element for coupling the garden care vehicle to a water outlet of the water supply station and a sensor for detecting the position of the water supply station or of the water outlet, wherein the at least one coupling element and the sensor are arranged on the garden care vehicle at a height above ground that is adapted to a height above ground of the water outlet and/or of a position marking element attached to the water supply station, such that the sensor is able to detect the water supply station or the water outlet or the position marking element when being moved in proximity to or over the water supply station or the water outlet or the position marking element and/or such that the at least one coupling element is brought into a position that enables coupling of the coupling element with the water outlet by moving it towards the water outlet.

In this way, a system of a garden care vehicle and a water supply station is provided that allows very precise and autonomous positioning of the garden care vehicle relative to the water supply station.

According to a further advantageous embodiment, the garden care vehicle, when being in the position relative to the external water outlet of the water supply station in which the at least one coupling element can be coupled to the external water outlet, causes the at least one coupling element to couple with the external water outlet, in particular by causing driving of the coupling element in the coupling direction towards the external water outlet,
or
wherein the garden care vehicle, when being in the position relative to the external water outlet of the water supply station in which the at least one coupling element can be coupled to the external water outlet, communicates with a control unit coupled to the water supply station or directly with the water supply station, wherein, in response to said communication, the external water outlet is caused to couple with the at least one coupling element, in particular by causing driving of the external water outlet in the coupling direction towards the at least one coupling element.

Thus, advantageous automatic coupling is enabled between garden care vehicle and water supply station.

According to a further advantageous embodiment, the garden care vehicle comprises a sensor that is a Hall-Sensor and that the water supply station comprises a position marking element that is a permanent magnet,
or
wherein the garden care vehicle comprises a sensor that is a an electromagnet and wherein the water supply station comprises a position marking element that is a metallic element, in particular an iron body configured to cause a variation in a magnetic field generated by the electromagnet,
or
wherein the garden care vehicle comprises a sensor that is a signal receiver and wherein the water supply station comprises a position marking element that is a signal emitter emitting an electrical or optical or magnetic signal, in particular wherein the signal emitter is supplied with electrical energy by a solar panel electrically coupled with the water supply station,
or
wherein the garden care vehicle comprises a sensor that is a camera configured to capture images of the environment surrounding the garden care vehicle that enable the garden care vehicle to navigate in the second navigation mode into the position relative to the external water outlet of the water supply station in which the at least one coupling element can be coupled to the external water outlet.

These configuration describe advantageous combination of sensors and elements to be sensed that are adapted for the use with the garden care vehicle and the water supply station.

### BRIEF DESCRIPTION OF THE DRAWING

The various aspects of the invention, including its particular features and advantages, will be readily understood from the following detailed description and the accompanying drawing, in which:
- Fig. 1: illustrates a perspective view of an example embodiment of an irrigation vehicle and a water supply station according to the invention;
- Fig. 2: illustrates an enlarged perspective view of the rear part of the irrigation vehicle and the water supply station shown in Fig. 1;

### DETAILED DESCRIPTION OF PREFERRED EMBODIMENTS

The present invention will now be described more fully with reference to the accompanying drawings, in which example embodiments are shown. However, this invention should not be construed as limited to the embodiments set forth herein. Throughout the following description similar reference numerals have been used to denote similar elements, parts, items or features, when applicable.

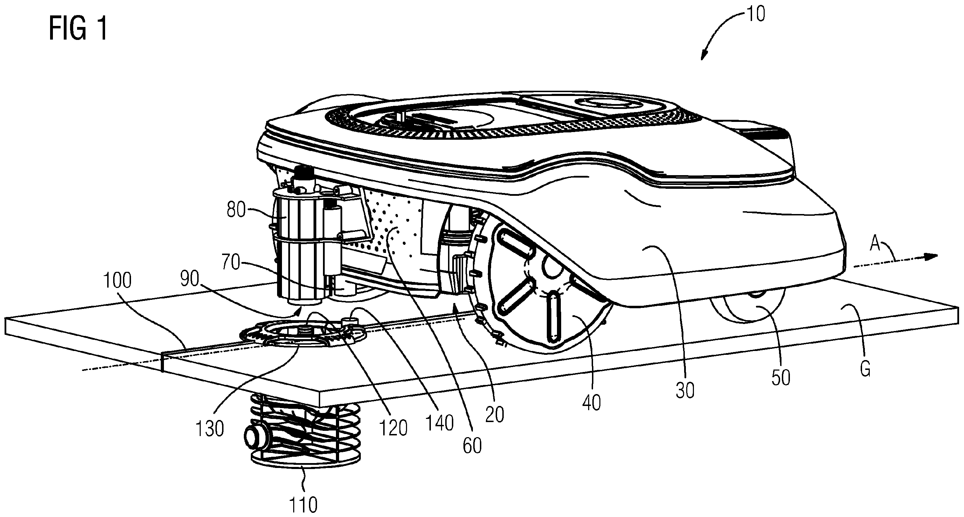

Fig. 1 illustrates a garden care vehicle 10 in the form of a robotic lawn mower. The garden care vehicle 10 comprises one or more watering devices (not shown), such as a nozzle or a sprayer or the like, for selectively watering or irrigating areas in a garden. The garden care vehicle 10 comprises front wheels 50 and rear wheels 40 for driving on a surface of a ground G. Further, the garden care vehicle 10 comprises a chassis 20 to which the front wheels 50 and rear wheels 40 are rotatably mounted and lateral enclosure elements 30 and a rear enclosure element 60. The garden care vehicle 10 further comprises a power supply and one or more motors for driving the front and rear wheels 50, 40.

The garden care vehicle 10 is shown in a position relative to a water supply station 110 in which a coupling element 90 can be coupled to a water outlet 120 of the water supply station 110. The water supply station 110 comprises a cylindrical body that is adapted to be arranged in the ground G and that comprises a water inlet that may be connected to a hose buried in the ground for supplying water to the water supply station 110. More specifically, the water supply station 110 may be a pop-up sprinkler that can be used to irrigate an area around its position or that may be used to supply water to the garden care vehicle 10. Alternatively, the water supply station 10 may be a non-pop up insertion sprinkler or a tap or another suitable type of water supply having a water outlet couplable with the coupling element 90 of the garden care vehicle.

The water supply station 110 may further comprise a surround 130 that is formed to an upper end of the body as a circumferential ring. The surround 130 may have one or more support surfaces for supporting the water supply station 110 on the surface of the ground G. Moreover, the water supply station 110 may comprise a position marking element 140 for marking the position of the water supply station 110 or the water outlet 120. Furthermore, a guide wire 100 is laid on or buried in the ground G, wherein the water supply station 110 is arranged relative to the guide wire 100 such that the guide wire 110 represents a prolongation of a radius of the body or of the surround 130 of the water supply station 110.

On the garden care vehicle 10, a coupling unit 80 is fixedly attached to the rear enclosure element 60, wherein the coupling unit 80 comprises at least one coupling element 90 for coupling the garden care vehicle 10 to the water supply station 110. More specifically, the coupling element 90 may be movable towards the water outlet 120 of the water supply station 110 and to couple with the water outlet 120.

The garden care vehicle 10 is able to navigate freely above the water supply station 110 into a position wherein the coupling element 90 can be coupled with the water outlet 130.

In order to do so, the garden care vehicle 10 is configured to be navigable or to navigate in a first non-autonomous or autonomous navigation mode and to detect a position of the water supply station 110 or the water outlet 120 or a position marking element 140 associated with said external water outlet 120. The first navigation mode may be a navigation mode in which the garden care vehicle 10 is navigated remotely, e.g. by user via a remote control or by a automatic remote control, or the first navigation mode may be an autonomous navigation mode in which the garden care vehicle 10 navigates in dependence one guide wires 100 or any other appropriate sensor device. Also a mixed mode is possible for the first navigation mode.

In response to a detection of the position of the water supply station 110 or the external water outlet 120 or the position marking element 140, the garden care vehicle 10 may navigate in a second autonomous navigation mode, wherein, in the first navigation mode, the garden care vehicle 10 may be configured to be navigated non-autonomously or to navigate autonomously towards the water supply station 110, and wherein, in the second navigation mode, the garden care vehicle 10 may be configured to navigate autonomously into a position relative to the detected position of the water supply station 110 or the external water outlet 120 or the position marking element 140 in which the at least one coupling element 90 can be coupled to the external water outlet 120.

The garden care vehicle 10 may comprise at least one first navigation assistance device, wherein the garden care vehicle 10 navigates in the first navigation mode in dependence on the at least one first navigation assistance device, e.g. dependent on a sensor for detecting guide wires 100 and/or a sensor for detecting obstacles and/or a sensor, in particular a GPS sensor, for detecting the position of the garden care vehicle 10 within an area of operation. Additionally or alternatively, the garden care vehicle 10 may comprise at least one second navigation assistance device, wherein the garden care vehicle 10 navigates in the second autonomous navigation mode in dependence on the at least one second navigation assistance device, e.g. including a sensor (70) that is a Hall-Sensor or a magnetic sensor or an optical sensor or a camera.

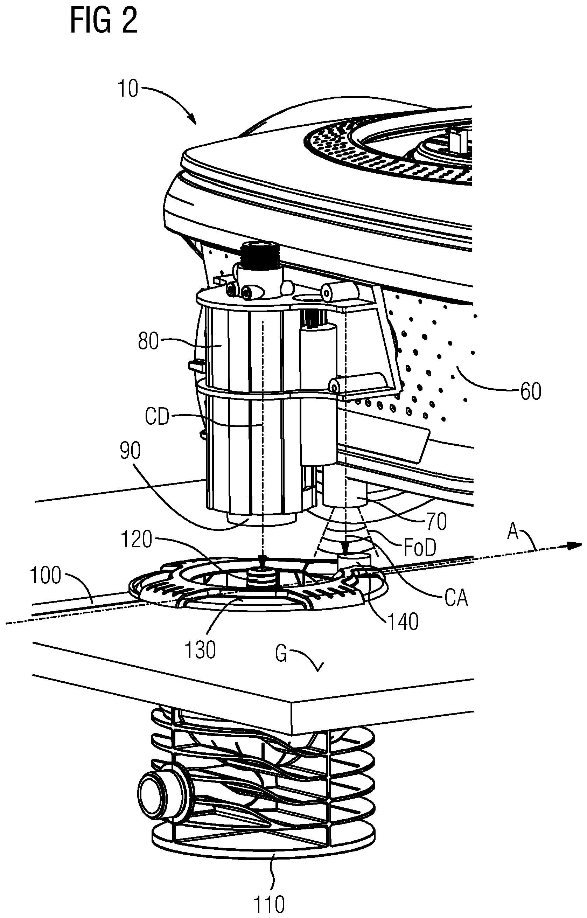

Fig. 2 illustrates an enlarged perspective view of the rear part of the irrigation vehicle and the water supply station shown in Fig. 1. The coupling element 90 is arranged at an outer perimeter at the rear side of the garden care vehicle 10 and the at least one sensor 70 of the sensor unit is arranged on a lower rear side of the chassis 20 adjacent to the at least one coupling element 90.

The coupling element 90 and the sensor 70 are arranged outside of an area between the wheels 40, 50 of the garden care vehicle 10. The coupling element 90 and the sensor 70 are arranged are further arranged on a line parallel to a central longitudinal axis A of the garden care vehicle 10, wherein the central longitudinal axis A corresponds to a forward and rearward straight ahead driving direction of the garden care vehicle 10.

The sensor 70 has a preferred field of detection FoD, wherein it may be fixed on the chassis or on the enclosure elements 30, 60 in such way that the preferred field of detection FoD is directed substantially in the same direction in which the at least one coupling element 90 can be coupled to the external water outlet 120. More specifically, the central axis CA of the preferred field of detection FoD may be arranged parallel to a movement direction CD of the at least one coupling element 90 for coupling to the external water outlet 120.

### LIST OF REFERENCE NUMERALS

- 10: Garden care vehicle
- 20: Chassis
- 30: Lateral enclosure element
- 40: Rear wheel
- 50: Front wheel
- 60: Rear enclosure element
- 70: Sensor
- 80: Coupling unit
- 90: Coupling element
- 100: Guide wire
- 110: Water supply station
- 120: External water outlet
- 130: Surround
- 140: Position marking element

- A: Central longitudinal axis
- CD: Coupling direction of coupling element
- G: Ground
- FoD: Field of detection
- CA: Central axis of field of detection

## Claims

1. Garden care vehicle (10) comprising at least one watering device, wherein the at least one watering device includes at least one coupling element (90) for coupling the at least one watering device to an external water outlet (120) of a water supply station (110) for supplying the watering device with water, wherein the garden care vehicle (10) is configured to be navigable or to navigate in a first non-autonomous or autonomous navigation mode and to detect a position of the water supply station (110) or the external water outlet (120) or a position marking element (140) associated with said external water outlet (120), and, in response to a detection of the position of the water supply station (110) or the external water outlet (120) or the position marking element (140), to navigate in a second autonomous navigation mode, wherein, in the first navigation mode the garden care vehicle (10) is configured to be navigated non-autonomously or to navigate autonomously towards the water supply station (110), and wherein, in the second navigation mode, the garden care vehicle (10) is configured to navigate autonomously into a position relative to the detected position of the water supply station (110) or the external water outlet (120) or the position marking element (140) in which the at least one coupling element (90) can be coupled to the external water outlet (120) .

2. Garden care vehicle (10) according to claim 1, **characterized in that** the garden care vehicle (10) comprises at least one first navigation assistance device, wherein the garden care vehicle (10) navigates in the first navigation mode in dependence on the at least one first navigation assistance device
and/or
**in that** the garden care vehicle (10) comprises at least one second navigation assistance device, wherein the garden care vehicle (10) navigates in the second autonomous navigation mode in dependence on the at least one second navigation assistance device or in dependence on the at least one first navigation device and the at least one second navigation device.

3. Garden care vehicle (10) according to claim 2, **characterized in that** the first navigation assistance device comprises a sensor for detecting guide wires (100) and/or a sensor for detecting obstacles and/or a sensor, in particular a GPS sensor, for detecting the position of the garden care vehicle (10) within an area of operation,
and/or
wherein the second navigation assistance device comprises a sensor unit for detecting the position of the external water outlet (120), in particular wherein the sensor unit includes a sensor (70) that is a Hall-Sensor or a magnetic sensor or an optical sensor or a camera.

4. Garden care vehicle (10) according to any one of the preceding claims, **characterized in that** the garden care vehicle (10) comprises a chassis (20) and/or enclosure elements (30, 60), wherein the at least one coupling element (90) is arranged in a fixed position on the chassis (20) and/or on the enclosure elements (30, 60), in particular wherein the at least one coupling element (90) is releasable from the fixed position on the chassis (20) and/or the enclosure elements (30, 60) in response to the garden care vehicle (10) reaching the position relative to the external water outlet (120) in which the at least one coupling element (90) can be coupled to the external water outlet (120), preferably wherein the at least one coupling element (90) can be coupled to the external water outlet (120) by a movement of the at least one coupling element (90) in a coupling direction (CD), optionally wherein the coupling direction (CD) is substantially perpendicular to a central longitudinal axis (A) of the garden care vehicle (10).

5. Garden care vehicle (10) according to any one of the preceding claims, **characterized in that** the garden care vehicle (10) comprises a chassis (20) and/or enclosure elements (30, 60), wherein the sensor unit, in particular the sensor (70), for detecting the position of the external water outlet (120) is arranged in a fixed position on the chassis (20) and/or on the enclosure elements (30, 60), in particular at a fixed distance to the fixed position of the at least one coupling element (90).

6. Garden care vehicle (10) according to any one of the preceding claims, **characterized in that** the at least one coupling element (90) is arranged at an outer perimeter of the garden care vehicle (10) and the at least one sensor (70) of the sensor unit is arranged on the chassis (20) and/or on the enclosure elements (30, 60) adjacent to the at least one coupling element (90),
and/or wherein the at least one coupling element (90) and at least the sensor (70) of the sensor unit are arranged outside of an area between the wheels (40, 50) of the garden care vehicle (10),
and/or wherein the at least one coupling element (90) and at least the sensor (70) of the sensor unit are arranged on or adjacent to a rear side or on or adjacent to a front side of the garden care vehicle (10),
and/or wherein the at least one coupling element (90) and at least the sensor (70) of the sensor unit are arranged on a line parallel to or matching with a central longitudinal axis (A) of the garden care vehicle (10), in particular wherein the central longitudinal axis (A) corresponds to a forward and rearward straight ahead driving direction of the garden care vehicle (10).

7. Garden care vehicle (10) according to claim 5 or 6, **characterized in that** the sensor (70) of the sensor unit for detecting the position of the external water outlet (120) has a preferred field of detection (FoD), wherein the sensor (70) is fixed on the chassis (20) and/or the enclosure elements (30, 60) in such way that the preferred field of detection (FoD) is directed substantially in the same direction in which the at least one coupling element (90) can be coupled to the external water outlet (120), in particular wherein a central axis (CA) of the preferred field of detection (FoD) is parallel to a movement direction (CD) of the at least one coupling element (90) for coupling to the external water outlet (120).

8. Water supply station (110), in particular including a tap or a pop-up sprinkler or an insertion sprinkler, comprising a water outlet (120), **characterized in that** the water supply station (110) further comprises at least one position marking element (140) directly attached to the water supply station (110) and configured to be detectable by a sensor (70) for detecting the position of the position marking element (140), in particular of a sensor unit of a garden care vehicle, preferably according to any one of the claims 1 to 7, approaching the position marking element (140).

9. Water supply station (110) according to claim 8, **characterized in that** the position marking element (140) is arranged in a fixed distance to the water outlet (120), in particular wherein the water supply station (110) further comprises or is arranged close to a guide wire (100) configured for guiding a garden care vehicle (10), preferably in a first navigation mode of a garden care vehicle (10), more preferably a garden care vehicle (10) according to any one of the claims 1 to 7, towards the water supply station (110), wherein at least a part of the guide wire (100) that is adjacent to the water supply station (110), the position marking element (140) and the water outlet (120) are arranged in the same vertical plane.

10. Water supply station (110) according to claim 8 or 9, **characterized in that** the position marking element (140) comprises at least one no active signal emitting element, in particular comprising a ferromagnetic material, preferably a permanent magnet, or in particular comprising at least one metallic element causing variations in a magnetic field, preferably an iron body, or comprises at least one active signal emitting element, in particular a signal emitter emitting an electrical or optical or magnetic signal, preferably wherein the signal emitter is supplied with electrical energy by a solar panel electrically coupled with the water supply station (110) .

11. Water supply station (110) according to any of the claims 8 to 10, **characterized in that** the water supply station (110) is at least partially arranged in a ground (G) in such way that the water outlet (120) and/or the position marking element (140) is/are arranged substantially at the same level with the surface of the ground (G).

12. Water supply station (110) according to any of the claims 8 to 11, **characterized in that** the water supply station (110) comprises a body configured to be arranged at least partially below the surface of the ground (G) and a surround (130) attached to the body and comprising a supporting surface for supporting the water supply station (110) on the surface of the ground (G), in particular wherein the position marking element (140) is fixedly arranged on the surround (130) and/or wherein the water outlet (120) is arranged centrally on the body, in particular concentrically to the surround (130), preferably wherein the surround (130) circumferentially surrounds the body.

13. System comprising a garden care vehicle (10), in particular according to any of the claims 1 to 7, and a water supply station (110), in particular according to any of the claims 8 to 12, wherein the garden care vehicle (10) comprises at least one coupling element (90) for coupling the garden care vehicle to a water outlet (120) of the water supply station (110) and a sensor (70) for detecting the position of the water supply station (110) or of the water outlet (120), wherein the at least one coupling element (90) and the sensor (70) are arranged on the garden care vehicle (10) at a height above ground (G) that is adapted to a height above ground (G) of the water outlet (120) and/or of a position marking element (140) attached to the water supply station (110), such that the sensor (70) is able to detect the water supply station (110) or the water outlet (120) or the position marking element (140) when being moved in proximity to or over the water supply station (110) or the water outlet (120) or the position marking element (140) and/or such that the at least one coupling element (90) is brought into a position that enables coupling of the coupling element (90) with the water outlet (120) by moving it towards the water outlet (120).

14. System according to claim 13, **characterized in that** the garden care vehicle (10), when being in the position relative to the external water outlet (120) of the water supply station (110) in which the at least one coupling element (90) can be coupled to the external water outlet (120), causes the at least one coupling element (90) to couple with the external water outlet (120), in particular by causing driving of the coupling element (90) in the coupling direction (CD) towards the external water outlet (120),
or
wherein the garden care vehicle (10), when being in the position relative to the external water outlet (120) of the water supply station (110) in which the at least one coupling element (90) can be coupled to the external water outlet (120), communicates with a control unit coupled to the water supply station (110) or directly with the water supply station (110), wherein, in response to said communication, the external water outlet (120) is caused to couple with the at least one coupling element (90), in particular by causing driving of the external water outlet (120) in the coupling direction (CD) towards the at least one coupling element (90).

15. System according to claim 13 or 14, **characterized in that** the garden care vehicle (10) comprises a sensor (70) that is a Hall-Sensor and that the water supply station (110) comprises a position marking element (140) that is a permanent magnet, or
wherein the garden care vehicle (10) comprises a sensor (70) that is a an electromagnet and wherein the water supply station (110) comprises a position marking element (140) that is a metallic element, in particular an iron body configured to cause a variation in a magnetic field generated by the electromagnet,
or
wherein the garden care vehicle (10) comprises a sensor (70) that is a signal receiver and wherein the water supply station (110) comprises a position marking element (140) that is a signal emitter emitting an electrical or optical or magnetic signal, in particular wherein the signal emitter is supplied with electrical energy by a solar panel electrically coupled with the water supply station (110),
or
wherein the garden care vehicle (10) comprises a sensor (70) that is a camera configured to capture images of the environment surrounding the garden care vehicle (10) that enable the garden care vehicle to navigate in the second navigation mode into the position relative to the external water outlet (120) of the water supply station (110) in which the at least one coupling element (90) can be coupled to the external water outlet (120).
